# FASCICULE DE BREVET EUROPEEN

(11) **EP 2 687 132 B1**
(45) Date de publication et mention de la délivrance du brevet: **06.05.2015**
(21) Numéro de dépôt: 13176533.1
(22) Date de dépôt: 15.07.2013
(51) Int. Cl.: A47J 27/08

(54) **Appareil de cuisson d'aliments sous pression à dispositif de commande amélioré**
Druckkochgerät mit verbesserter Bedienungsvorrichtung
Appliance for cooking food under pressure with improved control device

(30) Priorité: 16.07.2012 FR 1256841
(43) Date de publication de la demande: 22.01.2014
(73) Titulaire: SEB S.A., 69130 Ecully (FR)
(72) Inventeur: Anota, Daniel, Jean, Marie, 21000 DIJON (FR); Chameroy, Eric, 21260 VERONNES (FR); Blanc, Hervé, Eugène, René, 21000 DIJON (FR)
(74) Mandataire: Martin, Didier Roland Valéry

(56) Documents cités:
- WO-A1-00/16672
- WO-A1-96/01070
- FR-A1- 2 958 517
- FR-A1- 2 965 708

## Description

La présente invention se rapporte au domaine technique général des appareils de cuisson d'aliments sous pression, notamment à usage domestique, comportant au moins une cuve et un couvercle destiné à être rapporté sur la cuve pour former une enceinte de cuisson étanche, lesdits appareils étant conçus pour assurer, en toute sécurité, la cuisson sous pression des aliments contenus dans la cuve.

La présente invention concerne plus particulièrement un appareil de cuisson d'aliments sous pression comportant au moins :
- une cuve et un couvercle destiné à être rapporté sur la cuve pour former une enceinte de cuisson étanche,
- au moins un organe de verrouillage monté mobile sur le couvercle entre une position de verrouillage du couvercle sur la cuve et une position de déverrouillage dans laquelle le couvercle peut être retiré de la cuve,
- un dispositif de commande du mouvement dudit au moins un organe de verrouillage comportant un organe de manipulation apte à être actionné par un utilisateur de façon à provoquer le déplacement dudit au moins un organe de verrouillage, ledit organe de manipulation étant monté de manière à pouvoir être déplacé.

On connaît déjà bien évidemment des appareils de cuisson d'aliments sous pression, notamment à usage domestique, tels des autocuiseurs qui sont pourvus d'organes de verrouillage, par exemple de mâchoires, montées mobiles en translation radiale sur le couvercle entre une position de verrouillage du couvercle sur la cuve et une position de déverrouillage dans laquelle le couvercle peut être retiré de la cuve.

Dans les autocuiseurs de ce type, un dispositif de commande du mouvement des mâchoires est prévu afin que l'utilisateur puisse commander et effectuer le déplacement radial des mâchoires. Les autocuiseurs connus de ce type mettent généralement en oeuvre un dispositif de commande du mouvement des mâchoires comportant un organe de manipulation accessible à l'utilisateur pour que ce dernier puisse, par actionnement de l'organe de manipulation, commander le déplacement radial des mâchoires vers leur position de déverrouillage ou vers leur position de verrouillage pour respectivement ouvrir l'autocuiseur et enlever le couvercle ou verrouiller le couvercle sur la cuve avant le démarrage du cycle de cuisson.

Les dispositifs de commande connus ainsi que les organes de manipulation incorporés au sein de tels dispositifs de commande mettent généralement en oeuvre deux organes de manipulation distincts pour assurer respectivement l'ouverture puis la fermeture des mâchoires et incorporent indifféremment des boutons rotatifs ou des boutons poussoirs. Les dispositifs connus mettent par exemple en oeuvre un dispositif de commande comprenant un bouton de manipulation à actionnement sensiblement vertical pour assurer le déverrouillage des organes de verrouillage, lequel bouton est combiné à un bouton poussoir à actionnement radial pour assurer le déverrouillage.

La présence de deux organes de manipulation complique bien évidemment la chaîne cinématique du dispositif de commande et conduit également *in fine* à une ergonomie qui peut s'avérer complexe pour les utilisateurs contraints de combiner des mouvements de commande et d'actionnement plus ou moins sophistiqués dont la mémorisation peut par ailleurs se révéler laborieuse et même conduire à des erreurs de manipulation.

Les dispositifs de commande connus peuvent par ailleurs également demander à l'utilisateur d'exercer un effort conséquent pour assurer le déplacement des mâchoires ou pour assurer le déverrouillage des mâchoires ce qui constitue un autre inconvénient des dispositifs connus à ce jour.

Un appareil de cuisson d'aliments sous pression correspondant au préambule de la revendication 1 est connu de FR-2 965 708.

Les objets assignés à l'invention visent en conséquence à porter remède aux différents inconvénients énumérés précédemment et à proposer un nouvel appareil de cuisson d'aliments sous pression qui permet de simplifier la commande du verrouillage et du déverrouillage du couvercle sur la cuve.

Un autre objet de l'invention vise à proposer un nouvel appareil de cuisson d'aliments sous pression qui permet d'assurer la commande du verrouillage / déverrouillage des mâchoires en toute sécurité pour l'utilisateur.

Un autre objet de l'invention vise à proposer un nouvel appareil de cuisson sous pression qui permet d'assurer le verrouillage / déverrouillage du couvercle d'une manière particulièrement ergonomique et sans avoir à exercer d'efforts de manipulation importants.

Les objets assignés à l'invention sont également atteints à l'aide d'un appareil de cuisson d'aliments sous pression conforme à l'objet de la revendication 1.

D'autres particularités et avantages de l'invention apparaîtront et ressortiront plus en détail à la lecture de la description faite ci-après, en référence aux dessins annexés, donnés à titre purement illustratifs et non limitatifs, dans lesquels :
- La figure 1 illustre, selon une vue de dessus du couvercle, un appareil de cuisson d'aliments conforme à l'invention.
- La figure 2 illustre, selon une vue en coupe transversale, un appareil de cuisson d'aliments sous pression conforme à l'invention.
- La figure 3 illustre, selon une vue en perspective de dessus, un détail de réalisation d'un couvercle d'un appareil de cuisson d'aliments conforme à l'invention.
- Les figures 4 et 5 illustrent, selon des vues en perspective de dessus, un couvercle d'un appareil de cuisson d'aliments sous pression conforme à l'invention pourvu de mâchoires de verrouillage / déverrouillage, respectivement en position de verrouillage et déverrouillage.

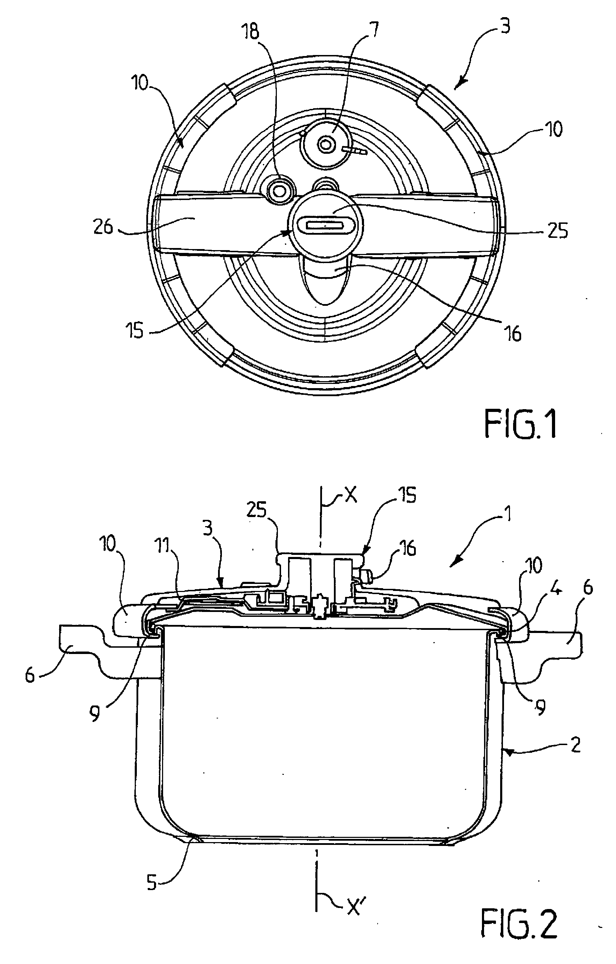

Tel qu'illustré aux figures 1 à 5, l'appareil de cuisson d'aliments sous pression 1 conforme à l'invention, en l'occurrence un autocuiseur à usage domestique, comporte au moins une cuve 2 et un couvercle 3 destiné à être rapporté sur la cuve 2 pour former une enceinte de cuisson étanche.

Dans l'exemple illustré en particulier à la figure 2, donné uniquement à titre illustratif, l'appareil de cuisson d'aliments sous pression 1 conforme à l'invention comporte une cuve 2 de forme sensiblement cylindrique, d'axe de symétrie et de révolution X-X' ainsi qu'un couvercle 3 de forme sensiblement circulaire rapporté de manière étanche sur la cuve 2, au niveau de son ouverture supérieure par l'intermédiaire d'un joint annulaire à lèvre 4.

Bien évidemment, et à titre de variante, l'appareil de cuisson d'aliments sous pression peut présenter toutes formes différentes autres que circulaire, la cuve 2 et les couvercles 3 pouvant être par exemple de forme ovoïde.

La cuve 2 et le couvercle 3 sont réalisés de manière connue à partir d'un matériau métallique tel que l'acier inoxydable, la cuve 2 comportant un fond 5 apte à diffuser la chaleur et rendu solidaire de la cuve 2, par exemple par frappe à chaud.

La cuve 2 est également pourvue de poignées de préhension 6, par exemple deux poignées, faisant saillie sensiblement radialement vers l'extérieur de l'appareil, étant entendu qu'au sens de l'invention, la direction « *radiale* » est définie en regard de l'axe XX' de l'appareil qui est sensiblement vertical lorsque l'appareil est dans sa position normale de fonctionnement.

Par ailleurs, au sens de l'invention, on distinguera la direction radiale interne correspondant à une direction ou un sens radial dirigé vers le centre de l'appareil en direction de son axe XX' et la direction radiale externe dirigée vers l'extérieur de l'appareil, c'est-à-dire en éloignement de l'axe X-X'.

Tel qu'illustré aux figures, le couvercle 3 se présente sous la forme d'un disque métallique circulaire dont la conformation et l'épaisseur présentent les caractéristiques appropriées pour conférer une bonne résistance à la pression lors du fonctionnement de l'appareil.

Tel qu'illustré également, l'appareil de cuisson d'aliments 1 conforme à l'invention possède au moins une soupape de fonctionnement 7, dont la sensibilité est par exemple réglable entre plusieurs niveaux de pression par l'utilisateur, montée sur le couvercle 3 par l'intermédiaire d'un perçage permettant le montage à coulissement libre de ladite soupape en réaction au niveau de pression régnant dans l'enceinte.

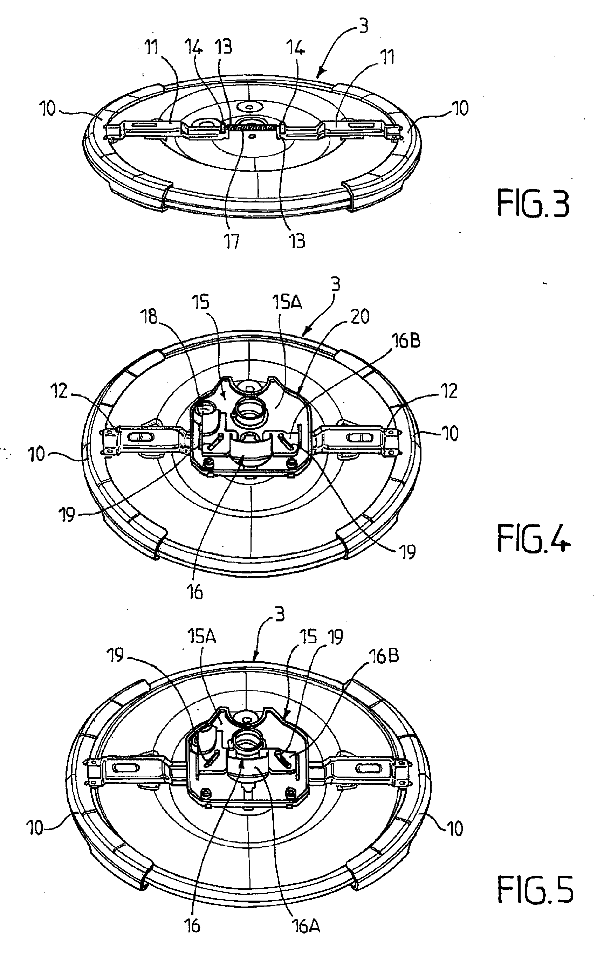

L'appareil de cuisson d'aliments sous pression 1 conforme à l'invention comporte également au moins un organe de verrouillage 10 monté mobile sur le couvercle 3 entre une position de verrouillage (figures 1 et 4) du couvercle 3 sur la cuve 2 et une position de déverrouillage (figure 5) dans laquelle le couvercle 3 peut être retiré de la cuve 2.

Tel qu'illustré aux figures, et selon une variante préférentielle de l'invention, ledit au moins un organe de verrouillage 10 est monté en translation radiale sur le couvercle 3. Il est néanmoins possible d'envisager, sans sortir du cadre de l'invention, de monter ledit au moins un organe de verrouillage 10 selon une autre cinématique de mouvement, par exemple en rotation sur le couvercle 3.

Tel qu'illustré aux figures, et à titre d'exemple uniquement, ledit au moins un organe de verrouillage 10 est formé par une mâchoire se présentant avantageusement sous la forme d'une plaque métallique profilée en U en forme d'arc de cercle ou de segment de manière à pouvoir venir enserrer le bord supérieur périphérique tombé 9 de la cuve 2 de manière bien connue de l'homme du métier. A titre de variante non représentée, l'organe de verrouillage 10 pourrait être formé de segments radiaux venant se verrouiller sur le couvercle, à travers des orifices appropriés, par translation radiale dans les sens externe et interne.

L'utilisation d'un ou plusieurs organes de verrouillage 10 se présentant sous la forme de mâchoire(s) en forme d'arc de cercle est cependant une variante préférentielle de l'invention, ledit au moins un organe de verrouillage 10 étant donc préférentiellement formé par au moins une mâchoire.

A titre encore plus préférentiel, et tel qu'illustré aux figures, l'appareil de cuisson d'aliments conforme à l'invention comporte, en tant qu'organe de verrouillage, au moins deux mâchoires montées diamétralement opposées sur le couvercle 3, chaque mâchoire étant solidaire d'un bras entraîneur 11 s'étendant radialement vers le centre du couvercle 3 à partir de la mâchoire.

Les bras entraîneurs 11 sont avantageusement guidés sur la surface supérieure du couvercle 3 et reliés par une extrémité 12 à la mâchoire 10 correspondante dans sa partie centrale, par exemple par sertissage, et par l'autre extrémité 13 à un dispositif de commande 15 par l'intermédiaire d'axes d'entraînement 14.

Ainsi, l'appareil de cuisson d'aliments sous pression1 conforme à l'invention comporte également au moins un dispositif de commande 15 du mouvement dudit au moins un organe de verrouillage 10, ledit dispositif de commande 15 comportant un organe de manipulation 16 apte à être actionné par un utilisateur de façon à provoquer le déplacement dudit au moins un organe de verrouillage 10, ledit organe de manipulation 16 étant monté de manière à pouvoir être déplacé.

Tel qu'illustré aux figures, et selon une variante préférentielle de l'invention, l'organe de manipulation 16 est monté de manière à pouvoir être déplacé selon une translation radiale sur le couvercle 3. Sans sortir du cadre de l'invention, l'organe de manipulation 16 pourrait néanmoins être monté selon d'autres translations géométriques et par exemple de manière à pouvoir être déplacé sur le couvercle 3 selon une direction axiale ou inclinée.

Tel qu'illustré en particulier à la figure 3, et selon une caractéristique importante de l'invention, ledit au moins un organe de verrouillage 10 est monté sur le couvercle 3 sous l'action d'un moyen de rappel élastique 17 de position vers sa position de verrouillage de telle sorte que la position de verrouillage correspond à une position de repos de l'organe de verrouillage 10.

En outre, l'organe de manipulation 16 est monté en liaison cinématique avec ledit au moins un organe de verrouillage 10 de telle manière que l'organe de manipulation 16 occupe une position de repos stable correspondant à ladite position de verrouillage et qu'une action de l'utilisateur sur l'organe de manipulation 16 à l'encontre de l'action du moyen de rappel élastique 17 provoque le déplacement de l'organe de verrouillage 10 vers sa position de déverrouillage, laquelle position de déverrouillage est instable.

Le montage cinématique de l'invention permet ainsi en effet de rappeler en permanence ledit au moins un organe de verrouillage 10 vers sa position de repos stable puisque ledit au moins un organe de verrouillage10 est en appui, notamment contre la périphérie du couvercle 3 grâce à l'action de rappel exercée dans le sens radial interne par le moyen de rappel élastique 17 de position.

Ce montage implique que lors de l'actionnement radial de l'organe de manipulation 16, par exemple par pression radiale interne, ledit au moins un organe de verrouillage 10 peut coulisser dans le sens radial externe pour venir occuper sa position de déverrouillage (figure 4) et que le simple relâchement de l'organe de manipulation 16 permet à l'organe de verrouillage 10 de se verrouiller automatiquement sur la cuve 2 sous l'action du moyen de rappel élastique 17.

Un tel montage permet d'obtenir une ergonomie de fonctionnement de l'appareil particulièrement simple puisqu'elle ne met en oeuvre qu'un seul et unique organe de manipulation susceptible d'être activé positivement par l'utilisateur, savoir l'organe de manipulation 16, ce qui en outre simplifie la gestuelle requise et favorise la mémorisation des gestes liés au verrouillage / déverrouillage de l'appareil.

Le montage proposé est particulièrement simplifié dans la mesure où la position de déverrouillage n'est pas une position stable ce qui simplifie le mécanisme de commande, cette position instable n'étant maintenue que si l'utilisateur maintient une action positive, c'est-à-dire exerce une force minimale suffisante et nécessaire sur l'organe de manipulation 16 à l'encontre du moyen de rappel élastique 17.

Selon une autre caractéristique de l'invention, l'appareil de cuisson comporte au moins une soupape de verrouillage 18 montée sur le couvercle 3 et apte à occuper, sous l'effet de la pression régnant dans l'appareil, une position haute d'étanchéité et une position basse de fuite, ladite soupape de verrouillage 18 étant montée pour qu'en position de verrouillage dudit au moins un organe de verrouillage 10, elle soit libre d'occuper sa position haute et verrouille ainsi ledit au moins un organe de verrouillage 10 dans sa position de verrouillage sur la cuve 2.

Cette disposition constructive est obtenue en prévoyant un perçage à travers le couvercle 3 à un endroit approprié pour que la soupape de verrouillage18 puisse réagir à la montée en pression de l'appareil et se déplacer en altitude et interdire le déplacement de l'organe de manipulation 16. Ceci permet d'éviter tout risque de déverrouillage de l'organe de verrouillage 10 lorsque l'appareil est en fonctionnement et qu'il subsiste à l'intérieur de l'enceinte une pression interne de fonctionnement supérieure à la pression atmosphérique.

De manière préférentielle, et tel qu'illustré aux figures, la soupape de verrouillage 18 est disposée sur le couvercle 3 de manière à venir interférer avec l'organe de manipulation 16 afin de bloquer sa position et sa possibilité de translation radiale.

A titre de variante, la soupape de verrouillage18 peut néanmoins être disposée à un autre endroit sur le couvercle 3 et par exemple de manière à venir interférer avec le bras entraîneur 11.

Tel qu'illustré aux figures, et dans le cas où l'appareil de cuisson 1 selon l'invention comporte au moins deux mâchoires montées diamétralement opposées sur le couvercle, chaque mâchoire étant solidaire d'un bras entraîneur 11 s'étendant radialement vers le centre du couvercle 3 à partir de la mâchoire 10, le moyen de rappel élastique 17 est interposé entre les deux bras entraîneurs 11.

Tel qu'illustré, le moyen de rappel élastique 17 est de préférence interposé entre les deux extrémités 13 de chacun des deux bras entraîneurs 11.

De manière particulièrement avantageuse, le moyen de rappel élastique 17 est un ressort de traction, qui tel qu'illustré, est interposé selon une direction radiale correspondant au sens longitudinal des deux bras entraîneurs 11.

De manière avantageuse, l'organe de manipulation 16 est un bouton poussoir permettant d'assurer la commande dudit au moins un organe de verrouillage10 dans le sens radial interne ainsi que dans le sens radial externe.

D'une manière générale, le dispositif de commande 15 comprend une platine 20, réalisée par exemple en un matériau plastique résistant à la chaleur, tel que du PBT et pourvu des découpes et orifices nécessaires pour accommoder le déplacement et la commande de la soupape de commande 7, de la soupape de verrouillage 18 et d'éventuels autres organes de l'appareil. L'organe de manipulation 16 est monté à translation radiale sur la platine 20 par coulissement et coopère avec les bras entraîneurs 11 pour assurer leur déplacement.

Tel qu'illustré, l'organe de manipulation 16 comporte une zone supérieure d'actionnement 16A en saillie radiale se prolongeant à un niveau inférieur par une plaque de commande 16B qui est en appui sur la face supérieure 15A de la platine 20 pour se translater radialement sur la dite face 15A.

La plaque de commande 16B est pourvue de deux lumières obliques 19 accommodant les axes entraîneurs 14 et au sein desquelles ils coulissent. Grâce à cette liaison cinématique, le déplacement radial de l'organe de manipulation 16 provoque le déplacement des axes entraineurs 14 solidaires des bras entraîneurs 11 lesquels en se déplaçant radialement mais selon une direction perpendiculaire au déplacement de l'organe de manipulation 16, entraînent le déplacement du ou des organes de verrouillage 10 vers leur position de verrouillage ou de déverrouillage.

Avantageusement, le dispositif de commande 15 comprend également une zone de surélévation centrale 25 pour favoriser la préhension manuelle du couvercle 3, par exemple en forme de pommeau, au droit et en dessous de laquelle s'étend radialement l'organe de manipulation 16.

Grâce à cette disposition, l'utilisateur peut saisir facilement le couvercle 3 par la surélévation centrale 25 entre son index et son pouce de telle manière qu'il puisse actionner facilement l'organe de manipulation 16 avec le pouce.

L'appareil de cuisson selon l'invention est également pourvu de pièces d'habillage 26 venant recouvrir et masquer les bras entraîneurs 11 ainsi que la platine 20. A titre de variante non représentée, la pièce d'habillage 26 peut se présenter sous la forme d'une barre transversale, par exemple en matériau plastique, en PBT par exemple, recouvrant les bras entraîneurs 11 ainsi que la platine 20 et incorporant la surélévation centrale 25 au sein de laquelle l'organe de manipulation 16 est monté à coulissement. On dispose ainsi d'une pièce d'habillage 26 monobloc étant entendu que dans sa forme la plus simple, la pièce d'habillage 26 recouvre les bras entraîneurs 11 ainsi que la platine 20 et incorpore la surélévation centrale 25.

Le fonctionnement de l'ouverture et de la fermeture de l'appareil de cuisson sous pression conforme à l'invention et à usage domestique est le suivant :
Pour pouvoir introduire des aliments dans l'appareil préalablement fermé, l'utilisateur doit tout d'abord saisir le couvercle 3 par la surélévation centrale 25 et exercer une force radiale sur l'organe de manipulation 16 dans la direction interne. Cette force radiale, exercée par exemple par le pouce, provoque la translation de l'organe de manipulation 16 selon une direction radiale correspondante et induit le déplacement radial selon une direction externe des organes de verrouillage 10 en l'occurrence les mâchoires, de leur position de verrouillage (figure 4) vers leur position de déverrouillage (figure 5). Lorsque les axes d'entraîneurs 14 ont atteint leur position extrême de butée illustrée à la figure 5 au sein des lumières 19, la position de déverrouillage illustrée à la figure 5 est atteinte, position dans laquelle les mâchoires sont hors de prise du bord supérieur périphérique tombé 9 de la cuve 2 de telle sorte que l'utilisateur, qui doit toujours exercer une pression sur l'organe de manipulation 16 peut retirer le couvercle 3.

Après avoir disposé les aliments à l'intérieur de la cuve 2 et en vue de la fermeture de la cuve 2, l'utilisateur saisit à nouveau le couvercle 3 selon les modalités décrites précédemment et doit à nouveau exercer une pression radiale interne sur l'organe de manipulation 16 selon les modalités décrites précédemment afin que les mâchoires viennent occuper leur position de déverrouillage.

L'utilisateur peut alors poser simplement le couvercle sur la cuve 2 et se contenter de relâcher l'organe de manipulation 16 qui revient automatiquement dans sa position initiale grâce à l'effort de rappel exercé par le moyen de rappel élastique 17 sur les bras entraîneurs 11. Le ou les organes de verrouillage 10 viennent donc automatiquement occuper leur position de rappel dans lesquelles elles viennent enserrer le bord supérieur périphérique tombé 9 de la cuve 2 pour assurer le verrouillage complet de l'appareil de cuisson, en l'occurrence un autocuiseur.

Il doit être noté que l'utilisation d'un joint annulaire 4 représentant une bonne souplesse de ses lèvres facilite l'affaissement du couvercle 3 lorsqu'il est posé sur la cuve 2, de telle sorte que le couvercle 3 vient naturellement, grâce à son propre poids, occuper une position suffisamment basse pour permettre aux mâchoires d'enserrer le bord supérieur périphérique tombé 9 bord tombé supérieur de la cuve 2. L'utilisateur n'a alors aucun effort particulier voire éventuellement qu'un effort minime à exercer, par exemple de pression axiale et verticale, à effectuer sur le couvercle 3 qui s'affaisse naturellement par simple effet de gravité, hormis l'actionnement radial de l'organe de manipulation 16.

Une fois la cuisson effectuée, l'utilisateur peut simplement déverrouiller le couvercle en appuyant radialement sur l'organe de manipulation 16 à l'encontre de la force de rappel exercée par le moyen de rappel élastique 17. Bien évidemment, si une pression résiduelle subsiste à l'intérieur de l'enceinte, la soupape de verrouillage 18 est dans sa position haute et vient bloquer le déplacement radial de l'organe de manipulation 16, de telle sorte que le couvercle 3 ne peut être enlevé, puisque les organes de verrouillage 10 ne peuvent être actionnés et sont donc condamnés à demeurer dans leur position de verrouillage.

Les moyens techniques de l'invention permettent ainsi de définir une nouvelle ergonomie de commande de l'ouverture et de la fermeture d'un appareil de cuisson sous pression qui est particulièrement simplifiée dans tous ses aspects à la fois en terme de construction de la chaîne cinématique et en terme de gestuelle de commande pour l'utilisateur.

## Revendications

1. Appareil de cuisson d'aliments sous pression comportant au moins :
- une cuve (2) et un couvercle (3) destiné à être rapporté sur la cuve (2) pour former une enceinte de cuisson étanche,
- au moins un organe de verrouillage (10) monté mobile sur le couvercle (3) entre une position de verrouillage du couvercle (3) sur la cuve (2) et une position de déverrouillàge dans laquelle le couvercle (3) peut être retiré de la cuve (2), ledit au moins un organe de verrouillage (10) étant monté sur le couvercle (3) sous l'action d'un moyen de rappel élastique (17) de position vers sa position de verrouillage de telle sorte que la position de verrouillage correspond à une position de repos de l'organe de verrouillage (10),
- un dispositif de commande (15) du mouvement dudit au moins un organe de verrouillage (10) comportant un organe de manipulation (16) apte à être actionné par un utilisateur de façon à provoquer le déplacement dudit au moins un organe de verrouillage (10) ledit organe de manipulation (16) étant monté de manière à pouvoir être déplacé et étant monté en liaison cinématique avec ledit au moins un organe de verrouillage (10),
- au moins une soupape de verrouillage (18) montée sur le couvercle (3) et apte à occuper sous l'effet de la pression régnant dans l'appareil, une position haute d'étanchéité et une position basse de fuite,
**caractérisé en ce que**
- l'organe de manipulation (16) est monté en liaison cinématique avec ledit au moins un organe de verrouillage (10) de telle manière que l'organe de manipulation (16) occupe une position de repos stable correspondant à ladite position de verrouillage (10) et qu'une action de l'utilisateur sur l'organe de manipulation (16) à l'encontre de l'action du moyen de rappel élastique (17) provoque le déplacement de l'organe de verrouillage (10) vers sa position de déverrouillage, laquelle position de déverrouillage est instable,
- ladite soupape de verrouillage (18) est montée pour qu'en position de verrouillage dudit au moins un organe de verrouillage (10), elle soit libre d'occuper sa position haute et verrouille ainsi ledit au moins un organe de verrouillage (10) en position de verrouillage.

2. Appareil de cuisson selon la revendication 1 **caractérisé en ce que** ledit au moins un organe de verrouillage (10) est monté mobile en translation radiale sur le couvercle (3).

3. Appareil de cuisson selon la revendication 1 **caractérisé en ce que** ledit au moins un organe de verrouillage (10) est monté mobile en rotation sur le couvercle (3).

4. Appareil de cuisson selon l'une des revendications 1 à 3 **caractérisé en ce que** ledit organe de manipulation (16) est monté de manière à pouvoir être déplacé selon une translation radiale sur le couvercle (3).

5. Appareil de cuisson selon l'une des revendications 1 à 4 **caractérisé en ce que** ledit organe de manipulation (16) est monté de manière à pouvoir être déplacé selon une direction axiale ou inclinée sur le couvercle (3).

6. Appareil de cuisson selon l'une des revendications 1 à 5 **caractérisé en ce que** ledit au moins un organe de verrouillage (10) est formé par une mâchoire.

7. Appareil de cuisson selon la revendication 6 **caractérisé en ce qu'**il comporte au moins deux mâchoires montées diamétralement opposées sur le couvercle (3), chaque mâchoire étant solidaire d'un bras entraîneur (11) s'étendant radialement vers le centre du couvercle (3) à partir de la mâchoire, ledit moyen de rappel élastique (17) étant interposé entre les deux bras entraîneurs (11).

8. Appareil de cuisson selon l'une des revendications précédentes **caractérisé en ce que** le moyen de rappel élastique (17) est un ressort de traction.

9. Appareil de cuisson selon l'une des revendications précédentes **caractérisé en ce que** l'organe de manipulation (16) est un bouton poussoir permettant d'assurer la commande dudit au moins un organe de verrouillage (10) dans le sens radial interne ainsi que dans le sens radial externe.

10. Appareil de cuisson selon l'une des revendications 7 à 9 **caractérisé en ce que** le dispositif de commande (15) comprend une platine (20) sur laquelle l'organe de manipulation (16) est monté à translation radiale, lequel organe de manipulation (16) coopère avec les bras entraîneurs (11) pour assurer leur déplacement.

11. Appareil de cuisson selon la revendication 10 **caractérisé en ce que** la soupape de verrouillage (18) est montée sur le couvercle (3) de manière à venir bloquer la translation radiale de l'organe de manipulation (16) lorsqu'elle occupe sa position haute.

12. Appareil de cuisson selon l'une des revendications précédentes **caractérisé en ce que** le dispositif de commande (15) comprend également une zone de surélévation centrale (25) pour favoriser la préhension manuelle du couvercle 3, par exemple en forme de pommeau, au droit et en dessous de laquelle s'étend radialement l'organe de manipulation (16).

13. Appareil selon la revendication 12 lorsqu'elle dépend de l'une des revendications 7 à 11 **caractérisé en ce qu'il** comprend une pièce d'habillage (26) recouvrant les bras entraîneurs (11) ainsi qu'une platine (20) et incorporant la surélévation centrale (25).

## Patentansprüche

1. Druckkochgerät für Nahrungsmittel, umfassend mindestens:
- einen Behälter (2) und einen Deckel (3), der dazu bestimmt ist, auf den Behälter (2) aufgesetzt zu werden, um einen dichten Kochraum zu bilden,
- mindestens ein Verriegelungselement (10), das beweglich auf dem Deckel (3) zwischen einer Verriegelungsposition des Deckels (3) auf dem Behälter (2) und einer Entriegelungsposition, in der der Deckel (3) von dem Behälter (2) genommen werden kann, montiert ist, wobei das mindestens eine Verriegelungselement (10) auf dem Deckel (3) unter der Wirkung eines elastischen Rückstellmittels (17) in seine Verriegelungsposition montiert ist, so dass die Verriegelungsposition einer Ruheposition des Verriegelungselements (10) entspricht,
- eine Steuervorrichtung (15) der Bewegung des mindestens einen Verriegelungselements (10), umfassend ein Betätigungselement (16), das geeignet ist, von einem Benutzer betätigt zu werden, um die Verschiebung des mindestens einen Verriegelungselements (10) hervorzurufen, wobei das Betätigungselement (16) derart montiert ist, dass es verschoben werden kann, und wobei es in kinematischer Verbindung mit dem mindestens einen Verriegelungselement (10) montiert ist,
- mindestens ein Verriegelungsventil (18), das auf dem Deckel (3) montiert und geeignet ist, unter der Wirkung des in dem Gerät herrschenden Drucks eine obere Dichtheitsposition und eine untere Leckageposition einzunehmen, **dadurch gekennzeichnet, dass**
- das Betätigungselement (16) in kinematischer Verbindung mit dem mindestens einen Verriegelungselement (10) derart montiert ist, dass das Betätigungselement (16) eine stabile Ruheposition entsprechend der Verriegelungsposition (10) einnimmt, und dass ein Einwirken des Benutzers auf das Betätigungselement (16) gegen die Wirkung des elastischen Rückstellmittels (17) die Verschiebung des Verriegelungselements (10) in seine Entriegelungsposition hervorruft, welche Entriegelungsposition instabil ist,
- das Verriegelungsventil (18) derart montiert ist, dass es in Verriegelungsposition des mindestens einen Verriegelungselements (10) frei seine obere Position einnehmen kann und so das mindestens eine Verriegelungselement (10) in Verriegelungsposition verriegelt.

2. Kochgerät nach Anspruch 1, **dadurch gekennzeichnet, dass** das mindestens eine Verriegelungselement (10) in radialer Translation beweglich auf dem Deckel (3) montiert ist.

3. Kochgerät nach Anspruch 1, **dadurch gekennzeichnet, dass** das mindestens eine Verriegelungselement (10) drehbeweglich auf dem Deckel (3) montiert ist.

4. Kochgerät nach einem der Ansprüche 1 bis 3, **dadurch gekennzeichnet, dass** das Betätigungselement (16) derart montiert ist, dass es in radialer Translation auf dem Deckel (3) verschoben werden kann.

5. Kochgerät nach einem der Ansprüche 1 bis 4, **dadurch gekennzeichnet, dass** das Betätigungselement (16) derart montiert ist, dass es in eine axiale oder geneigte Richtung auf dem Deckel (3) verschoben werden kann.

6. Kochgerät nach einem der Ansprüche 1 bis 5, **dadurch gekennzeichnet, dass** mindestens ein Verriegelungselement (10) von einer Klemmbacke gebildet ist.

7. Kochgerät nach Anspruch 6, **dadurch gekennzeichnet, dass** es mindestens zwei Klemmbacken umfasst, die diametral entgegengesetzt liegend auf dem Deckel (3) montiert sind, wobei jede Klemmbacke mit einem Mitnehmerarm (11) verbunden ist, der sich radial zur Mitte des Deckels (3) von der Klemmbacke aus erstreckt, wobei das elastische Rückstellmittel (17) zwischen den beiden Mitnehmerarmen (11) angeordnet ist.

8. Kochgerät nach einem der vorhergehenden Ansprüche, **dadurch gekennzeichnet, dass** das elastische Rückstellmittel (17) eine Zugfeder ist.

9. Kochgerät nach einem der vorhergehenden Ansprüche, **dadurch gekennzeichnet, dass** das Betätigungselement (16) ein Druckknopf ist, der es ermöglicht, die Steuerung des mindestens einen Verriegelungselements (10) in die innere Radialrichtung sowie in die äußere Radialrichtung zu gewährleisten.

10. Kochgerät nach einem der Ansprüche 7 bis 9, **dadurch gekennzeichnet, dass** die Steuervorrichtung (15) eine Platte (20) umfasst, auf der das Betätigungselement (16) mit radialer Translation montiert ist, wobei das Betätigungselement (16) mit den Mitnehmerarmen (11) zusammenwirkt, um ihre Verschiebung zu gewährleisten.

11. Kochgerät nach Anspruch 10, **dadurch gekennzeichnet, dass** das Verriegelungsventil (18) auf dem Deckel (3) montiert ist, um die radiale Translation des Betätigungselements (16) zu blockieren, wenn es seine obere Position einnimmt.

12. Kochgerät nach einem der vorhergehenden Ansprüche, **dadurch gekennzeichnet, dass** die Steuervorrichtung (15) auch eine erhöhte zentrale Zone (25) umfasst, um das manuelle Ergreifen des Deckels (3) zu begünstigen, beispielsweise in Form eines Knaufes, im rechten Winkel zu demselben und unterhalb desselben sich radial das Betätigungselement (16) erstreckt.

13. Gerät nach Anspruch 12, wenn er von einem der Ansprüche 7 bis 11 abhängt, **dadurch gekennzeichnet, dass** es eine Verkleidung (26) umfasst, die die Mitnehmerarme (11) sowie eine Platte (20) bedeckt und die zentrale Erhöhung (25) einschließt.

## Claims

1. A utensil for cooking food under pressure including at least:
- a vessel (2) and a lid (3) that is designed to be mounted on said vessel (2) to define a sealed cooking enclosure;
- at least one locking member (10) mounted to move on the lid (3) between a locking position in which the lid (3) is locked on the vessel (2) and an unlocking position in which the lid (3) can be taken off the vessel (2), said at least one locking member (10) being mounted on the lid (3) in such a manner as to be urged by positioning resilient return means (17) towards its locking position so that the locking position corresponds to a rest position of the locking member (10),
- a control device (15) for controlling the movement of said at least one locking member (10), which control device includes an operating member (16) suitable for being actuated by a user in such a manner as to cause said at least one locking member (10) to move, said operating member (16) being mounted in such a manner as to able to be moved and being mounted to be drivingly linked to said at least one locking member (10),
- at least one locking valve (18) mounted on the lid (3) and suitable, under the effect of the pressure prevailing inside the utensil, for taking up a sealing high position and a leakage low position, said utensil being **characterized in that**:
- the operating member (16) is mounted to be drivingly linked to said at least one locking member (10) in a manner such that the operating member (16) takes up a stable rest position corresponding to said locking position and that action by the user on the operating member (16) against action from the resilient return means (17) causes the locking member (10) to move towards its unlocking position, which position is unstable;
- said locking valve (18) is mounted so that, when said at least one locking member (10) is in the locking position, it is free to take up its high position, thereby locking said at least one locking member (10) in its locking position.

2. A cooking utensil according to claim 1, **characterized in that** said at least one locking member (10) is mounted to move in radial translation on the lid (3).

3. A cooking utensil according to claim 1, **characterized in that** said at least one locking member (10) is mounted to move in rotation on the lid (3).

4. A cooking utensil according to any one of claims 1 to 3, **characterized in that** said operating member (16) is mounted in such a manner as to able to be moved in radial translation on the lid (3).

5. A cooking utensil according to any one of claims 1 to 4, **characterized in that** said operating member (16) is mounted in such a manner as to be able to be moved in an axial or inclined direction on the lid (3).

6. A cooking utensil according to any one of claims 1 to 5, **characterized in that** said at least one locking member (10) is formed by a jaw.

7. A cooking utensil according to claim 6, **characterized in that** it includes at least two jaws mounted diametrically opposite each other on the lid (3), each jaw being secured to a drive arm (11) extending radially towards the center of the lid (3) from the jaw, said resilient return means (17) being interposed between the two drive arms (11).

8. A cooking utensil according to any preceding claim, **characterized in that** the resilient return means (17) are constituted by a traction spring.

9. A cooking utensil according to any preceding claim, **characterized in that** the operating member (16) is a push-button making it possible to cause said at least one locking member (10) to move in the inward radial direction and in the outward radial direction.

10. A cooking utensil according to any one of claims 7 to 9, **characterized in that** the control device (15) includes a deck (20) on which the operating member (16) is mounted to move in radial translation, which operating member (16) co-operates with the drive arms (11) to cause them to move.

11. A cooking utensil according to claim 10, **characterized in that** said at least one locking valve (18) is mounted on the lid (3) in such a manner as to come to prevent the operating member (16) from moving in radial translation when it is in its high position.

12. A cooking utensil according to any preceding claim, **characterized in that** the control device (15) also has a raised central zone (25) for making it easier to take hold of the lid (3) in the hand, which zone is, for example, in the shape of a knob, in register with and below which the operating member (16) extends radially.

13. A utensil according to claim 12, when claim 12 depends on any one of claims 7 to 11, **characterized in that** it includes a piece of trim (26) covering the drive arms (11) and a deck (20), and incorporating the raised central zone (25).
